Europäisches Patentamt

European Patent Office

Office européen des brevets

(19)

(11) **EP 1 632 462 A1**

(12) **EUROPEAN PATENT APPLICATION**
published in accordance with Art. 158(3) EPC

(43) Date of publication:
08.03.2006 Bulletin 2006/10

(51) Int Cl.:
*C04B 35/64* (1968.09)

(21) Application number: 04723407.5

(22) Date of filing: 25.03.2004

(86) International application number:
PCT/JP2004/004203

(87) International publication number:
WO 2004/085340 (07.10.2004 Gazette 2004/41)

(84) Designated Contracting States:
DE FR PL

(30) Priority: 26.03.2003 JP 2003084348

(71) Applicant: NGK INSULATORS, LTD.
Nagoya-City, Aichi Pref. 467-8530 (JP)

(72) Inventors:
• MUROI, Y. c/o Legal Affairs & I.P. Dept.
Aichi 467-8530 (JP)

• YAMAMOTO, Y. c/o Legal Affairs & I.P. Dept.
Aichi 467-8530 (JP)
• WADA, Y. c/o Legal Affairs & I.P. Dept.
Aichi 467-8530 (JP)
• ICHIKAWA, S. c/o Legal Affairs & I.P. Dept.
Aichi 467-8530 (JP)

(74) Representative: Paget, Hugh Charles Edward
Mewburn Ellis LLP
York House
23 Kingsway
London WC2B 6HP (GB)

(54) **METHOD FOR MANUFACTURING HONEYCOMB STRUCTURE**

(57) A method of manufacturing a honeycomb structure according to an embodiment of the present invention is **characterized by** including the steps of: forming a clay by mixing and kneading a silicon carbide powder raw material, a metal silicon raw material, an organic binder, and a raw material containing alkaline earth metal; forming the clay to form a formed body; and pre-firing and firing the formed body, wherein firing is performed in a protective container made of silicon carbide in which a solid containing aluminum is placed.

## FIG.1

EP 1 632 462 A1

## Description

## Technical Field

The present invention relates to a method of manufacturing a honeycomb structure, which is for instance used in a filter for purifying exhaust gas from an automobile, a catalyst carrier, and the like.

## Background Art

A honeycomb structure of this type is manufactured by mixing and forming raw materials into a predetermined shape, then placing this formed body on a firing protective container, and degreasing and firing the formed body.

Specifically, the honeycomb structure is manufactured in the following manner. A clay is obtained by adding metal silicon, an organic binder, and an alkaline earth metal to a silicon carbide powder raw material , and then by mixing and kneading the foregoing materials. Thereafter the clay is formed into a honeycomb shape, and a formed body thus obtained is fired after the formed body is pre-fired to remove the organic binder in the formed body (see Japanese Unexamined Patent Publication No. 2002 - 201082).

To be more precise, the silicon carbide powder is used as the rawmaterial, and the organic binder made of metal silicon, methylcellulose, hydroxypropylmethylcellulose, a surfactant, and water is added thereto, and the foregoing materials are kneaded with a kneading machine and formed into a plastic clay. Thereafter, the clay is shaped by further kneading with a kneading machine and formed into a honeycomb shape with an extruder. Next, this honeycomb formed body is dried by applying microwaves and hot air thereto, and is cut into the formed body with predetermined dimensions.

Thereafter, any one of open portions of a through hole on the dried body is sealed with a slurried silicon carbide material. This sealing is performed alternately in terms of both end surfaces of the dried body.

Furthermore, the dried body after the sealing is disposed in a firing furnace, and pre-firing and firing are carried out. The organic binder in the formed body is removed in the pre-firing, and a porous honeycomb structure having a structure in which silicon carbide grains are mutually bonded together with the metal silicon partially on surfaces of the grains (a Si-bonded SiC structure) is obtained in the firing.

In the pre-firing and the subsequent firing, a box-like "sheath" and a tray-like firing jig, that is, heat-resistant protective containers are used. The body to be fired is housed or placed in these protective containers, and is disposed in the firing furnace together with the protective container.

The pre-firing and the firing may be performed as separate processes by use of the same protective container or different protective containers, or may be performed as a continuous process by use of the same protective container.

As the material for the protective container, a refractory material such as mullite, alumina or cordierite is generally used (Japanese Unexamined Patent Publication H5 - 262571).

In the conventional method of manufacturing a honeycomb structure, when using a protective container made of an alumina refractory material, aluminum vapor is adhered to the surfaces of the silicon carbide grains of the honeycomb structure which is the body to be fired at the time of firing. An oxide phase is formed on the surfaces, which oxide phase is made of aluminum oxide, and the alkaline earth metal as well as the metal silicon in the body to be fired. Accordingly, wettability of the metal silicon in the honeycomb structure is improved and surfaces of vents in the honeycomb structure are smoothened, whereby a pressure loss of the honeycomb structure can be reduced. However, the alumina refractory material has poor durability and therefore requires a high replacement frequency and eventually causes a cost increase.

Here, when a protective container is made of a silicon carbide refractory material, the protective container has more excellent durability than the alumina protective container. However, since an aluminum composition is not included therein, no aluminum vapor is generated. Hence it is not possible to achieve improvement of wettability of the metal silicon, and an increase in the pressure loss of the honeycomb structure is eventually incurred.

Disclosure of the Invention

An object of the present invention is to provide a method of manufacturing a honeycomb structure, which is capable of improving durability of a protective container and of reducing a pressure loss of the honeycomb structure.

To attain the foregoing obj ect, the method of manufacturing a honeycomb structure according to an embodiment of the present invention is characterized by including the steps of: forming a clay by mixing and kneading a silicon carbide powder raw material, a metal silicon rawmaterial, anorganicbinder, and a raw material containing alkaline earth metal; forming the clay to form a formed body; and pre-firing and firing the formed body, wherein firing is performed in a protective container made of silicon carbide in which a solid containing aluminum is placed.

**Brief Description of the Drawings**

FIG. 1 is a schematic perspective view showing existence of a solid (a particulate body) containing aluminum in a protective container, which is used in a firing step in a method of manufacturing a honeycomb structure of a first embodiment of the present invention.

FIG. 2A is a schematic perspective view showing a first layout example of a solid (a refractory block body) containing aluminum in a protective container, which is used in a firing step in a method of manufacturing a honeycomb structure of a second embodiment of the present invention.

FIG. 2B is a schematic perspective view showing a second layout example of the solid (the refractory block body) containing aluminum in the protective container, which is used in the firing step in the method of manufacturing a honeycomb structure of the second embodiment of the present invention.

FIG. 2C is a sectional view showing a third layout example of the solid (the refractory block body) containing aluminum in the protective container, which is used in the firing step in the method of manufacturing a honeycomb structure of the second embodiment of the present invention.

**Best Modes for Carrying Out the Invention**

A honeycomb structure according to an embodiment of the present invention is manufactured in the following manner. A clay is obtained by adding metal silicon, an organic binder, and alkaline earth metal to a silicon carbide powder raw material, and then mixing and kneading the foregoing materials into a honeycomb shape. Thereafter the clay is formed and the organic binder in a formed body thus obtained is removed by pre-firing the formed body, and then the formed body is fired. In particular, a manufacturing method of this embodiment is characterized in that at least the firing out of the pre-firing and the firing is performed in a protective container made of silicon carbide in which a solid containing aluminum is placed.

In this honeycomb structure, the metal silicon has a role of wetting surfaces of silicon carbide grains by means of melting at the time of firing and bonding the grains together, thereby constituting a Si-bonded SiC structure. Therefore, according to the manufacturing method of this embodiment, it is possible to manufacture a porous honeycomb structure having the Si-bonded SiC structure.

Meanwhile, since the silicon carbide used in the honeycomb structure has high heat resistance, the silicon carbide is suitably applied to a DPF (a diesel particulate filter) or the like which is often exposed to a high temperature at the time of a heat treatment of accumulated particulates, for example. An average grain size of the silicon carbide powder raw material in the honeycomb structure is preferably set in a range of 2 to 4 time as large as an average pore diameter of the honeycomb structure which is finally obtained by the manufacturing method of this embodiment, for example.

Although an appropriate amount of additive metal silicon in the honeycomb structure varies depending on the grain size or the grain shape of the silicon carbide powder raw material, its amount is set with in a range of 5 to 50 wt% relative to a total amount of the silicon carbide powder raw material and the metal silicon, for example. An average grain size of the metal silicon at this time is set equal to or below 50% of the average grain size of the silicon carbide powder raw material, for example.

In order to extrude the clay formed by using the silicon carbide grains as an aggregate while mixing the metal silicon, the alkaline earth metal, and a pore-forming agent depending on the necessity, smoothly into a honeycomb shape, one or more types of the organic binders are added as a auxiliary forming agent in an amount equal to or above 2 wt% relative to the total amount of the silicon carbide powder raw material and the metal silicon (that is, 2 wt% of the organic binder is added on the assumption that the total amount of the silicon carbide powder rawmaterial and the metal silicon is equal to 100 wt%) . Addition of this organic amount in excess of 30 wt% is not preferable because excessively high porosity is caused after the pre-firing, which leads to insufficient strength.

The types of the binders used herein are not particularly limited. However, to be more precise, it is for instance possible to cite hydroxypropylmethylcellulose, methylcellulose, hydroxyethylcellulose, carboxylmethylcellulose, polyvinyl alcohol, and the like.

Meanwhile, when using the honeycomb structure as a filter, the pore-forming agent is added upon preparation of the clay in order to raise the porosity. An amount of the additive pore-forming agent is set equal to or below 30 wt% relative to the total amount of the silicon carbide powder raw material and the metal silicon, for example.

The type of the pore-forming agent used herein is not particularly limited. However, to be more precise, it is for instance possible to cite graphite, resin foam, foamed resin foam, wheat flour, starch, phenol resin, methyl polymethacrylate, polyethylene, polymethacrylate, polyethylene terephthalate, and the like. One type or a combination of two or more types of the pore-forming agents may be used depending on the purpose.

Meanwhile, the alkaline earth metal is added upon preparation of the clay in order to improve wettability of the metal silicon at the time of firing. An amount of the additive alkaline earth metal is set equal to or below 5 wt% relative to the total amount of the silicon carbide powder raw material and the metal silicon, for example.

The type of the alkaline earth metal used herein is not particularly limited. However, to be more precise, it is for instance possible to cite calcium, strontium, and the like.

The clay obtained by mixing and kneading the above-described raw materials in accordance with an ordinary method is formed into a desired honeycomb shape by use of an extrusion forming method or the like.

Subsequently, the organic binder in the formed body thus obtained is removed (degreased) by pre-firing the formed body, and then the firing is performed. The pre-firing is carried out at a temperature lower than the melting point of the metal silicon. To be more precise, it is possible to retain a predetermined temperature once in a range from about 150°C to 700°C and to set a temperature rising rate equal to or below 50°C/hr within the predetermined temperature range.

An atmosphere at the pre-firing may be an oxidative atmosphere (the air atmosphere). However, when a large amount of the organic binder is included in the formed body, it may be combusted in the course of the pre-firing and may drastically raise the temperature of the formed body. Accordingly, the pre-firing is carried out in an inert atmosphere such as $N_2$ or Ar.

The pre-firing and the subsequent firing may be performed as separate processes in the same furnace or different furnaces, or may be performed as a continuous process in the same furnace. In the firing, it is necessary to soften the metal silicon in order to obtain a composition to bond the silicon carbide grains with the metal silicon. Since the melting point of the metal silicon is equal to 1410°C, the firing is performed in an inert atmosphere other than $N_2$ such as Ar at a temperature in a range from 1400°C to 1800°C. Moreover, the most appropriate firing temperature is determined in light of a microstructure and characteristic values.

At this time, at least the firing out of the pre-firing and the firing is performed by placing a solid containing aluminum in the protective container made of silicon carbide. This protective container includes a "sheath" or a tray-like firing jig.

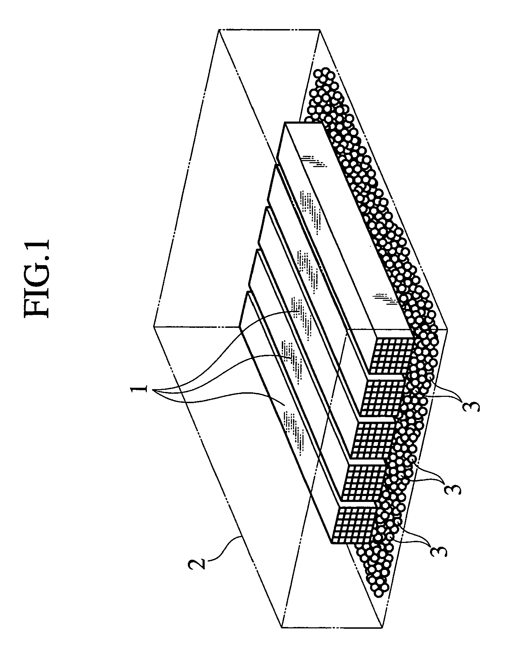

FIG. 1 and FIG's. 2A to 2C are schematic drawings showing states of firing in embodiments of the present invention. FIG. 1 shows a first embodiment which applies refractory particulate bodies 3 as the solid containing aluminum, and FIG's. 2A to 2C show a second embodiment in which the solid containing aluminum is formed of refractory block bodies 4. At this time, a protective container 2 is made of a refractory material such as silicon carbide in any case.

In the first embodiment, as shown in FIG. 1, a layer of the refractory firing particulate bodies 3 is formed on a bottom surface of the box-like protective container 2, and formed bodies (firing objects) 1 after the pre-firing which are cut into appropriate sizes are placed on this layer. The firing is performed in this state.

The refractory firing particulate bodies 3 are formed in the following manner. Aluminum and an organic binder are added to a refractory grain raw material, the foregoing materials are mixed and kneaded to obtain a clay, thereafter this clay is appropriately fired, and then crushed. Oxides such as $Al_2O_3$, $ZrO_2$ or $Y_2O_3$, carbides such as SiC, nitrides such as $Si_3N_4$ or AlN, and other grains such as mullite are used as the material of the refractory grain raw material.

Meanwhile, in the second embodiment, as shown in FIG's. 2A to 2C, the formed bodies (the fired bodies) 1 after the pre-firing are placed in the protective container 2 together with the refractory block bodies 4. The firing is performed in this state.

A plate body or a fibrous body formed by mixing aluminum into the refractory grain material such as an aluminum block or an aluminum fiber, is used as the refractory block body 4, the aluminum block or the aluminum fiber being used as a heat insulating material on a wall surface in a furnace.

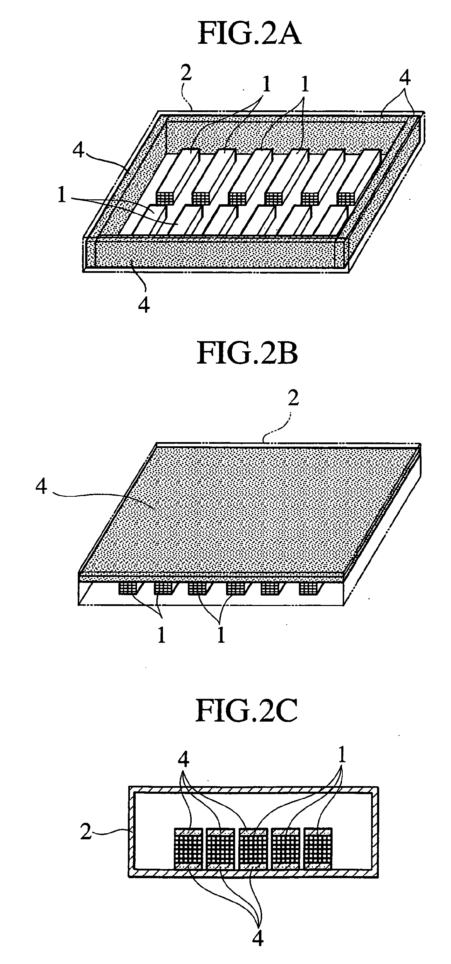

In FIG. 2A, the refractory block bodies 4 are placed along inner walls of side walls of the protective container 2, and the formed bodies (the fired bodies) 1 are placed on the bottom surface of the protective container 2 surrounded by the refractory block bodies 4.

In FIG. 2B, the refractory block body 4 is provided inside the protective container 2 so as to cover an upper surface of the protective container 2, and the formed bodies (the fired bodies) 1 are placed on the bottom surface of the protective container 2 opposed to the refractory block body 4. In FIG. 2C, the refractory block bodies 4 are respectively formed in the same size as upper surfaces and lower surfaces of the formed bodies (the fired bodies) 1 and are respectively placed so as to contact the upper surfaces and the lower surfaces, while the formed bodies (the fired bodies) 1 are placed on the bottom surface of the protective container 2 in the state where the refractory block bodies 4 are placed on the upper surfaces and the lower surfaces thereof.

In FIG. 2C, the refractory block bodies 4 are placed on the upper surface and the lower surface of the formed body (the body to be fired) 1. Here, it is also possible to place the refractory block body 4 on any one of the upper surface and the lower surface and to omit the refractory block body 4 on the other surface.

The firing is performed in the states of these first and second embodiments while setting the atmosphere inside the protective container 2 to the inert atmosphere other than $N_2$ such as Ar. When the pre-firing and the firing are performed in the same furnace as the continuous process, the firing is performed after gas replacement of an atmosphere at the time of the pre-firing with the inert atmosphere other than $N_2$ such as Ar. By this firing, the formed bodies (the fired bodies) 1 are formed into porous honeycomb structures having the Si-bonded SiC structure.

In the course of the firing, aluminum evaporates from the solid containing aluminum (the refractory firing particulate bodies 3 or the refractory block bodies 4) , and this aluminum vapor is adhered to the surfaces of the silicon carbide grains of the formed bodies (the fired bodies) 1 and thereby forms an oxide phase which is made of aluminum oxide, and the alkaline earth metal as well as the metal silicon in the fired bodies. In this way, wettability of the metal silicon in the honeycomb structure is improved and inner wall surfaces of the honeycomb being circulation holes for exhaust gas are smoothened. Accordingly, it is possible to reduce pressure losses of passages and eventually to reduce a pressure loss of the honeycomb structure after firing.

Moreover, since the refractory material made of silicon carbide is used as the protective container 2, it is possible to achieve improvement of durability of the protective container 2 in itself.

In addition, in the first embodiment, the refractory particulate bodies 3 are used as the solid containing aluminum. Accordingly, it is possible to increase a surface area of the solid. In this way, it is possible to enhance aluminum evaporation efficiency.

Meanwhile, in the second embodiment, the solid containing aluminum is formed of the refractory block bodies 4. Accordingly, it is possible to ensure convenience in terms of handling the solid containing aluminum.

Moreover, preferably, the solid containing aluminum (the refractory firing particulate bodies 3 or the refractory block bodies 4) is formed such that the weight of aluminum in the solid remains in a range equal to or above 0.01 on the assumption that the weight of the formed bodies (the fired bodies) 1 is equal to 1. Specifically, when the weight of all the formed bodies (the fired bodies) 1 in the single protective container 2 is defined as 1, the weight of aluminum in the entire solid in the protective container 2 remains in the range equal to or above 0.01. The fired bodies at this time are in a dried state before the firing.

The above-described condition defines the weight of aluminum which can ensure a sufficient aluminum evaporation amount for improving the wettability of the metal silicon in the honeycomb structure and for reducing the pressure loss by use of a relative weight ratio to the fired bodies 1 Specifically, when the above-described condition is satisfied, it is possible to obtain a sufficient aluminum evaporation amount for filling the surroundings of the fired bodies 1 with the aluminum atmosphere at the time of the firing.

Incidentally, assuming that the weight of the fired bodies 1 is equal to 1, it is possible to reduce the pressure loss of the manufactured honeycomb structure (a pressure loss reducing effect) when the weight of aluminum in the solid is in the range equal to or above 0.01. On the contrary, when the weight of aluminum in the solid is below 0.01, it is difficult to achieve the above-described pressure loss reducing effect.

Meanwhile, it is preferable that the solid containing aluminum (the refractory firing particulate bodies 3 or the refractory block bodies 4) contains aluminum in an amount equal to or above 1% in terms of a weight composition ratio.

The above-described condition defines the weight of aluminum which can ensure the sufficient aluminum evaporation amount for improving the wettability of the metal silicon in the honeycomb structure and for reducing the pressure loss by use of the aluminum content in the solid. Specifically, when the aluminum content in the solid is too low, it is not possible to obtain the sufficient aluminum evaporation amount for filling the surroundings of the fired bodies 1 with the aluminum atmosphere. Therefore, the aluminum content in the solid is defined herein.

Incidentally, it is possible to reduce the pressure loss of the manufactured honeycomb structure (the pressure loss reducing effect) when the aluminum content in the solid is set equal to or above 1 wt% . On the contrary, when the content is set below 1 wt%, it is not possible to achieve the above-described pressure loss reducing effect.

Meanwhile, the refractory firing particulate bodies 3 in the first embodiment are preferably formed of particulate bodies having grain sizes in a range from 0.01 to 1 mm.

Under this condition, it is possible to knock the particulate bodies 3 away easily upon separation of the particulate bodies 3 without causing damage to the fired bodies 1 while ensuring the high aluminum evaporation efficiency attributable to the large surface area.

Incidentally, when the grain sizes of the refractory particulate bodies 3 are small, there is a risk of damage to the fired bodies upon separation because of occurrence of adhesion to the fired bodies 1. Moreover, when the grain sizes are large, there is a risk of damage to the fired bodies upon separation because of occurrence of bites into the fired bodies 1. That is, when the grain sizes of the refractory particulate bodies 3 falls below 0.01 mm or exceeds 1 mm, probability of damage to the fired bodies 1 is increased upon separation of the particulate bodies 3.

Meanwhile, it is preferable that the refractory block bodies 4 in the second embodiment have water absorption equal to or above 0.05 wt%.

Under this condition, it is possible to ensure a bulk density of the refractory block body in a sufficient level for causing easier evaporation of the aluminum component. In this way, it is possible to obtain the sufficient aluminum evaporation amount for filling the surroundings of the fired bodies with the aluminum atmosphere at the time of the firing.

More preferably, the solid containing aluminum (the refractory firing particulate bodies 3 or the refractory block bodies 4) is placed such that a separation distance from the body to be fired 1 is equal to or below 50 cm at the time of the firing.

Under this condition, it is possible to fill the surroundings of the body to be fired 1 with the aluminum atmosphere which evaporates from the solid (the refractory firing particulate bodies 3 or the refractory block bodies 4), and to supply the sufficient aluminum vapor to the body to be fired 1.

Incidentally, when the separation distance between the solid containing aluminum (the refractory firing particulate bodies 3 or the refractory block bodies 4) and the body to be fired 1 is increased in excess of 50 cm, the aluminum atmosphere for filling the surroundings of the body to be fired 1 gradually becomes thinner as well, and the supply of aluminum to the body to be fired 1 also runs short.

EXAMPLES

Now, the present invention will be described further in detail based on examples. However, the present invention will not be limited only to these examples.

Note that the following manufacturing conditions were applied to respective ceramic structures of examples and reference examples except for the firing process. Specifically, a clay for forming was fabricated by kneading SiC raw material powder having an average grain size of 50 "m and metal Si powder having an average grain size of 5 "m in the proportion of 8:2, adding 6 parts by weight of methylcellulose, 2.5 parts by weight of a surfactant, and 24 parts by weight of water to 100 parts by weight of this powder, and mixing and kneading the foregoing materials uniformly. This clay was formed into a honeycomb shape having an outline of 45 mm, a length of 120 mm, a partition wall of 120 mm, a thickness of the partition wall of 0.43 mm, and a cell density of 100 cells/in$^2$ (16 cells/cm$^2$) by use of an extruder. Subsequently, the pre-firing and the firing were performed under the respective conditions below by use of the formed body thus obtained. Here, the pre-firing was performed in the air atmosphere under a condition of 400°C for 5 hours, while the firing was performed in an Ar atmosphere under a condition of 1450°C for 2 hours.

Evaluation concerning the examples and the reference example was performed by finding a failure rate by visually observing failures that occur upon separation of the fired honeycomb structure from the solid containing aluminum, and by finding a pressure loss. The pressure loss was calculated as an average value of one hundred honeycomb structures, and the failure rate was calculated on the basis of the following expression:

```
Failure rate= (the number of honeycomb structures causing

failures) / 100N*100
```

Here, N denotes the number of the fired honeycomb structures.

(Examples 1 and 2)

Examples 1 and 2 represent the aspect of the first embodiment in which the body to be fired was placed on the refractory particulate bodies as shown in FIG. 1. Accordingly, the solid (the refractory particulate bodies) contacted the body to be fired and the separation distance was equal to 0 cm.

Particulate bodies having the grain sizes in a range from 0.01 to 1.00 mm and the weight composition ratio of aluminum in the particulate bodies equal to 1% were used as the refractory particulate bodies. The particulate bodies were laid on the bottom surface of the protective container 2 made of silicon carbide such that the weights of aluminum were set to 0.000 (Reference Example 1 (Comparative Example)), 0.005 (Reference Example 2), 0.007 (Reference Example 3), 0.010 (Example 1), and 0.020 (Example 2) on the assumption that the weights of the fired bodies were equal to 1, and the layers of the refractory firing particulate bodies 3 (support layers) were formed (see FIG. 1). Thereafter, the firing was performed under the same conditions while placing the fired bodies on the support layers, and the honeycomb structures having the Si-bonded SiC structure were thereby manufactured. Results are shown in Table 1.

Table 1

| | (Weight of aluminum) / (Weight of Fired Body) | Failure rate | Pressure Loss of Honeycomb Structure |
|---|---|---|---|
| Reference Example 1 (Comparative Example) | 0.000 | 0% | 2.6 kPa |
| Reference Example 2 | 0.005 | 0% | 2.6 kPa |
| Reference Example 3 | 0.007 | 0% | 2.4 kPa |

Table continued

| | (Weight of aluminum) / (Weight of Fired Body) | Failure rate | Pressure Loss of Honeycomb Structure |
|---|---|---|---|
| Example 1 | 0.010 | 0% | 2.2 kPa |
| Example 2 | 0.020 | 0% | 2.2 kPa |

As it is apparent from Table 1, concerning the failure rate, the number of occurrence of failures was 0 in terms of all the specimen particulate bodies including Examples 1 and 2 as well as Reference Examples 1 to 3. This is because the failure rate depends largely on the grain sizes of the particulate bodies and the grain sizes of all the specimen particulate bodies in the range from 0.01 to 1.00 mm were appropriate.

Meanwhile, concerning the pressure loss, while the case of not using the particulate bodies at all (Reference Example 1) showed 2.6 kPa, the pressure loss reduction effect obtained was limited to 2.4 kPa (Reference Example 3) or 8% at the maximum among the Reference Examples even when the particulate bodies were used. On the contrary, the cases in Examples 1 and 2 showed 2.2 kPa which represented the pressure loss reduction effect equivalent to 15%.

From the above-described facts, it is understood that it is preferable to set the weight of aluminum in the range equal to or above 0.010 on the assumption that the weight of the body to be fired is equal to 1.

(Examples 3 and 4)

Examples 3 and 4 represent the aspect of the first embodiment in which the body to be fired was placed on the refractory particulate bodies as shown in FIG.1. Accordingly, the separation distance between the solid (the refractory particulate bodies) and the body to be fired is equal to 0 cm.

The particulate bodies having the grain sizes in the range from 0.01 to 1.00 mm and the weight of aluminum in the particulate bodies equal to 0.01 on the assumption that the weight of the body to be fired was equal to 1 were used as the refractory particulate bodies. The particulate bodies were formed to satisfy the weight composition ratios of aluminum in the particulate bodies equal to 0% (Reference Example 4 (the same as Reference Example 1)), 0.5% (Reference Example 5), 0.7% (Reference Example 6), 1.0% (Example 3 (the same as Example 1)), and 3.0% (Example 4). Support layers were formed by laying the respective particulate bodies in the protective container made of silicon carbide. Thereafter, the firing was performed under the same conditions while placing the fired bodies on the support layers, and the honeycomb structures having the Si-bonded SiC structure were thereby manufactured. Results are shown in Table 2.

Table 2

| | Weight composition ratio of aluminum in Solid (in oxide equivalent) | Failure rate | Pressure Loss of Honeycomb Structure |
|---|---|---|---|
| Reference Example 4 (Comparative Example) | 0% | 0% | 2.6 kPa |
| Reference Example 5 | 0.5% | 0% | 2.6 kPa |
| Reference Example 6 | 0.7% | 0% | 2.5 kPa |
| Example 3 | 1.0% | 0% | 2.2 kPa |
| Example 4 | 3.0% | 0% | 2.2 kPa |

As it is apparent from Table 2, concerning the failure rate, the number of occurrence of failures was 0 in terms of all the specimen particulate bodies including Examples 3 and 4 as well as Reference Examples 4 to 6. This is considered due to the above-described reason.

Meanwhile, concerning the pressure loss, while the case of not using the particulate bodies at all (Reference Example 4) showed 2.6 kPa, the pressure loss reduction effect obtained was limited to 2.5 kPa (Reference Example 6) or 4% at the maximum among the Reference Examples even when the particulate bodies were used. On the contrary, the cases in Examples 3 and 4 showed 2.2 kPa which represented the pressure loss reduction effect equivalent to 15%.

From the above-described facts, in terms of the refractory firingparticulate bodies, it is understood that it is preferable to set the weight composition ratio of aluminum in the particulate bodies in the range equal to or above 1%.

(Examples 5 and 6)

Although Examples 5 and 6 applied the refractory particulate bodies of the first embodiment, the fired bodies and the refractory particulate bodies were placed in the protective container mutually separately.

The particulate bodies having the grain sizes in the range from 0.01 to 1.00 mm and the weight of aluminum in the particulate bodies equal to 0.01 on the assumption that the weight of the body to be fired was equal to 1 were used as the refractory particulate bodies. The particulate bodies were placed in the protective container made of silicon carbide such that the separation distances from the fired bodies were set to 150 cm (Reference Example 7), 100 cm (Reference Example 8), 70 cm (Reference Example 9), 50 cm (Example 5), and 30 cm (Example 6). Then, the firing was performed under the same conditions in terms of all the specimen particulate bodies, and the honeycomb structures having the Si-bonded SiC structure were thereby manufactured. Results are shown in Table 3.

Table 3

|  | Distance between Solid and Fired Body | Failure rate | Pressure Loss of Honeycomb Structure |
|---|---|---|---|
| Reference Example 7 | 150 cm | 0% | 2.6 kPa |
| Reference Example 8 | 100 cm | 0% | 2.6 kPa |
| Reference Example 9 | 70 cm | 0% | 2.5 kPa |
| Example 5 | 50 cm | 0% | 2.2 kPa |
| Example 6 | 0 cm | 0% | 2.2 kPa |

As it is apparent from Table 3, concerning the failure rate, the number of occurrence of failures was 0 in terms of all the specimen particulate bodies as a matter of course because the firing is performed in the state where the fired bodies and the refractory particulate bodies are mutually separated.

Meanwhile, concerning the pressure loss, while Reference Example 7 at the maximum separation distance (150 cm) showed 2.6 kPa, the pressure loss reduction effect obtained was limited to 2.5 kPa or 4% even in Reference Example 9 (70 cm) where the body to be fired approached most closely among the Reference Examples. On the contrary, the cases in Examples 5 and 6 showed 2.2 kPa which represented the pressure loss reduction effect equivalent to 15%.

From the above-described facts, it is understood that it is preferable to set the separation distance between the solid containing aluminum (the refractory particulate bodies 3 or the refractory block bodies 4) and the body to be fired 1 in the range equal to or below 50 cm.

(Examples 7 and 8)

Examples 7 and 8 represent the aspect of the first embodiment in which the body to be fired was placed on the refractory particulate bodies as shown in FIG. 1. Accordingly, the separation distance between the solid (the refractory particulate bodies) and the body to be fired is equal to 0 cm.

The particulate bodies having the weight composition ratio of aluminum equal to 1% were used as the refractory particulate bodies. Meanwhile, on the assumption that the weight of the body to be fired was equal to 1, the weight of aluminum was adjusted to 0.01. Further, the particulate bodies were classified into grain size ranges thereof below 0.005 mm (Reference Example 10), from 0.005 to 0.01 mm (Reference Example 11), from 0.01 to 0.1 mm (Example 7), from 0.10 to 1.00 mm (Example 8), from 1.00 to 2.00 mm (Reference Example 12), and above 2.00 mm (Reference Example 13). Support layers were formed by laying the respective grain size groups in the protective container made of silicon carbide (See FIG. 1). Thereafter, the firing was performed on all the grain size groups under the same conditions while placing the fired bodies on the support layers, and the honeycomb structures having the Si-bonded SiC structure were thereby manufactured. Results are shown in Table 4.

Table 4

|  | Grain Sizes of Particulate Bodies | Failure rate | Pressure Loss |
|---|---|---|---|
| Reference Example 10 | below 0.005 mm | 100% | 2.1 kPa |
| Reference Example 11 | 0.005 mm to 0.01 mm | 70% | 2.2 kPa |
| Example 7 | 0.01 mm to 0.10 mm | 0% | 2.2 kPa |

Table continued

|  | Grain Sizes of Particulate Bodies | Failure rate | Pressure Loss |
|---|---|---|---|
| Example 8 | 0.10 mm to 1.00 mm | 0% | 2.2 kPa |
| Reference Example 12 | 1.00 mm to 2.00 mm | 50% | 2.2 kPa |
| Reference Example 13 | above 2.00 mm | 100% | 2.3 kPa |

As it is apparent from Table 4, no apparent differences were confirmed in terms of the pressure losses among Examples 7 and 8 as well as Reference Examples 10 to 13. This fact indicates that the grain sizes of the refractory particulate bodies do not largely concern the wettability of the metal silicon.

Meanwhile, concerning the failure rate, while Examples 7 and 8 had the failure occurrence rates equal to 0%, Reference Examples 10 to 13 showed high occurrence rates equal to or above 50%. In particular, failures were observed in the honeycomb structures after firing in terms of all the samples of Reference Examples 10 and 13. This is attributable to the facts that, when the grain sizes are below 0.001 mm, the particulate bodies tend not only to cohere to one another easily and also to be attached to the fired bodies easily. For this reason, in addition to inconvenience of handling, it is difficult to knock the particulate bodies away from the fired bodies. On the other hand, when the grain sizes exceed 2 mm, the particulate bodies tend to bite into the fired bodies easily. For this reason, it is difficult to knock the particulate bodies away from the fired bodies.

From the above-described facts, it is understood that it is preferable to form the refractory firing particulate bodies by use of the particulate bodies having the grain sizes in the range from 0.01 to 1.0 mm.

(Examples 9 and 10)

Examples 9 and 10 represent the aspect of the second embodiment in which the separation distance between the solid (the refractory block bodies) and the body to be fired was set equal to 30 m (see FIG. 2B).

Block bodies having the weight composition ratio of aluminum in the block bodies equal to 1% and the weight of aluminum equal to 0.01 on the assumption that the weight of the body to be fired was equal to 1 were used as the refractory block bodies. The block bodies having values of water absorption equal to 0.00% (Reference Example 14), 0.01% (Reference Example 15), 0.03% (Reference Example 16), 0.05% (Example 9), and 0.10% (Example 10) were prepared and used as these block bodies. The firing was performed under the same conditions other than the refractory blocks, and the honeycomb structures having the Si-bonded SiC structure were thereby manufactured. Results are shown in Table 5.

Table 5

|  | Water Absorption of Solid | Failure rate | Pressure Loss |
|---|---|---|---|
| Reference Example 14 | 0.00% | 0% | 2.6 kPa |
| Reference Example 15 | 0.01% | 0% | 2.6 kPa |
| Reference Example 16 | 0.03% | 0% | 2.4 kPa |
| Example 9 | 0.05% | 0% | 2.2 kPa |
| Example 10 | 0.10% | 0% | 2.2 kPa |

As it is apparent from Table 5, concerning the failure rate, the number of occurrence of failures was 0 in terms of all the specimen particulate bodies as a matter of course because the firing was performed in the state where the fired bodies and the refractory particulate bodies were mutually separated.

Meanwhile, concerning the pressure loss, while the case having no water absorption at all (Reference Example 14) showed 2.6 kPa, the pressure loss reduction effect obtained was limited to 2.4 kPa or 8% even in Reference Example where the water absorption was raised. On the contrary, the cases in Examples 9 and 10 showed 2.2 kPa which represented the pressure loss reduction effect equivalent to 15%.

From the above-described facts, it is understood that it is preferable to set the water absorption of the refractory block bodies in the range equal to or above 0.05%.

As described above, according to the method of manufacturing a honeycomb structure of the present invention, aluminum evaporates from the solid containing aluminum in the course of the firing, and this aluminum vapor is attached to the surfaces of the silicon carbide grains of the fired bodies and thereby forms the oxide phase which is made of aluminum oxide, and the alkaline earth metal as well as the metal silicon in the fired bodies. In this way, the wettability of the metal silicon is improved and there is a possibility to reduce the pressure loss of the honeycomb structure after firing. Moreover, since the refractory material made of silicon carbide is used as the protective container, the protective container exerts fine durability, and it is possible to reduce process costs.

When the total of the aluminum content in the solid is set equal to or above 0.01 relative to the weight of the body to be fired, it is possible to obtain an amount of aluminum evaporation sufficient to fill the surroundings of the body to be fired with the aluminum atmosphere at the time of the firing, and it is thereby possible to reduce the pressure loss of the honeycomb structure more reliably.

When the aluminum content in the solid is set equal to or above 1% in oxide equivalent, it is possible to obtain an amount of aluminum evaporation sufficient to fill the surroundings of the body to be fired with the aluminum atmosphere at the time of the firing, and it is thereby possible to reduce the pressure loss of the honeycomb structure even more reliably.

When the particulate bodies are used as the solid, it is possible to improve the evaporation efficiency of aluminum by increasing the surface area of the solid. Accordingly, it is possible to reduce the pressure loss of the honeycomb structure even more reliably.

Moreover, when the particulate bodies are used as the solid containing aluminum, by setting the grain sizes thereof in the range from 0.01 to 1mm, it is possible to knock the particulate bodies away easily while ensuring the high evaporation efficiency of aluminum attributable to the large surface area but without causing damage to the body to be fired upon separation of the particulate bodies. Therefore, it is also possible to reduce costs due to an increase in the yield of the honeycomb structures.

In addition, when the refractory block bodies are used as the solid containing aluminum, it is possible to ensure convenience of handling the solid containing aluminum.

Meanwhile, when the water absorption of the refractory block bodies is set equal to or above 0.05 wt%, the aluminum evaporation efficiency can be improved. Accordingly, it is possible to further reduce the pressure loss of the honeycomb structure.

Meanwhile, by setting the separation distance between the solid containing aluminum and the body to be fired within 50 cm, it is possible to supply sufficient aluminum vapor to the body to be fired, and thereby to reduce the pressure loss of the honeycomb structure even more reliably.

## Claims

1. A method of manufacturing a honeycomb structure comprising the steps of:

   making a clay by mixing and kneading a silicon carbide powder raw material, a metal silicon raw material, an organic binder, and a raw material containing alkaline earth metal;
   forming the clay to form a formed body; and
   pre-firing and firing the formed body,
   wherein the firing is performed in a protective container made of silicon carbide in which a solid containing aluminum is placed.

2. The method of manufacturing a honeycomb structure according to claim 1,
   wherein the solid has a total weight ratio of aluminum in the solid placed in the protective container equal to or above 0.01 relative to a total weight of a fired material.

3. The method of manufacturing a honeycomb structure according to any of claims 1 and 2,
   wherein the solid contains aluminum equal to or above 1% in terms of a weight composition ratio in oxide equivalent.

4. The method of manufacturing a honeycomb structure according to any one of claims 1 to 3,
   wherein the solid is a particulate body.

5. The method of manufacturing a honeycomb structure according to claim 4,
   wherein the particulate body has a grain size in a range from 0.01 to 1 mm.

6. The method of manufacturing a honeycomb structure according to any one of claims 1 to 3,
   wherein the solid is a block body.

7. The method of manufacturing a honeycomb structure according to claim 6,
   wherein the block body has water absorption equal to or above 0.05% by weight.

8. The method of manufacturing a honeycomb structure according to any one of claims 1 to 7,
wherein the solid is placed such that a separation distance from a body to be fired is equal to or below 50 cm.

FIG.1

EP 1 632 462 A1

# FIG.2A

# FIG.2B

# FIG.2C

## INTERNATIONAL SEARCH REPORT

| International application No. |
| --- |
| PCT/JP2004/004203 |

A. CLASSIFICATION OF SUBJECT MATTER
Int.Cl⁷  C04B35/64

According to International Patent Classification (IPC) or to both national classification and IPC

B. FIELDS SEARCHED

Minimum documentation searched (classification system followed by classification symbols)
Int.Cl⁷  C04B35/64, C04B35/565, B01J35/04, B01J27/224, B01D39/20,
         B01D46/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2002-356383 A   (NGK Insulators, Ltd.), 13 December, 2002 (13.12.02), Claims & WO 02/81406 A1 | 1-8 |
| Y | JP 61-291461 A   (Toyota Motor Corp.), 22 December, 1986 (22.12.86), Claim 1; page 2, lower right column, lines 1 to 3; page 3, upper left column, lines 11 to 13 (Family: none) | 1,8 |
| Y | JP 61-26565 A   (Noritake Co., Ltd.), 05 February, 1986 (05.02.86), Claim 1; page 2, lower right column, line 10 to page 3, upper left column, line 3 (Family: none) | 1,2,4-7 |

| [X] Further documents are listed in the continuation of Box C. | | [ ] See patent family annex. |
| --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 03 June, 2004 (03.06.04) | Date of mailing of the international search report 22 June, 2004 (22.06.04) |
| --- | --- |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2004/004203 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 61-106459 A (Asahi Glass Co., Ltd.),<br>24 May, 1986 (24.05.86),<br>Claims 3, 5; page 4, lower left column, lines 1 to 2<br>(Family: none) | 1,3,4-7 |

Form PCT/ISA/210 (continuation of second sheet) (January 2004)